# EUROPÄISCHE PATENTANMELDUNG

(11) **EP 2 280 324 A1**
(43) Veröffentlichungstag der Anmeldung: **02.02.2011**
(21) Anmeldenummer: 09164843.6
(22) Anmeldetag: 08.07.2009
(51) Int. Cl.: G05B 13/04, B21B 37/00

(54) **Steuerverfahren für ein Walzwerk mit Adaption eines von einem Walzmodell verschiedenen Zusatzmodells anhand einer Walzgröße**

(71) Anmelder: SIEMENS AKTIENGESELLSCHAFT, 80333 München (DE)
(72) Erfinder: Weinzierl, Klaus, Dr., 90480 Nürnberg (DE); Löffler, Hans-Ulrich, Dr., 91054 Erlangen (DE)

(57) **Zusammenfassung**

Eine Steuereinrichtung (3) für ein Walzwerk (1) steuert das Walzwerk (1) mit Ansteuerbefehlen (A) an, so dass ein erstes Walzgut (2) entsprechend den Ansteuerbefehlen (A) in einem ersten Walzgerüst (4) des Walzwerks (1) gewalzt wird. Die Steuereinrichtung (3) erfasst in Echtzeit mindestens eine Walzgröße (F, M), mit der das Walzen des ersten Walzguts (2) im ersten Walzgerüst (4) des Walzwerks (1) erfolgt. Die Steuereinrichtung (3) ermittelt mittels eines Walzmodells (11), welches das Walzen des ersten Walzguts (2) im ersten Walzgerüst (4) beschreibt, eine mit der erfassten Walzgröße (F, M) korrespondierende erwartete Walzgröße (F', M'). Die Steuereinrichtung (3) ermittelt mittels eines Zusatzmodells (12) eine Eigenschaft des Walzguts (2), die von der erfassten Walzgröße (F, M) verschieden ist und zum Zeitpunkt des Walzens des ersten Walzguts (2) im ersten Walzgerüst (4) in dem ersten Walzgut (2) vorliegt. Die Steuereinrichtung (3) berücksichtigt die ermittelte Eigenschaft des ersten Walzguts (2) im Rahmen des Walzmodells (11) bei der Ermittlung der erwarteten Walzgröße (F', M'). Die Steuereinrichtung (3) ermittelt die Abweichung (δ) der erfassten Walzgröße (F, M) von der erwarteten Walzgröße (F', M') und adaptiert anhand der Abweichung (δ) der erfassten Walzgröße (F, M) von der erwarteten Walzgröße (F', M') zumindest das Zusatzmodell (12). Weiterhin wird die Abweichung (δ) einer erfassten zusätzlichen Messgröße (F, M) von einer zusätzlichen, anhand zumindest des Walzmodells (11) ermittelten korrespondierenden Erwartungsgröße (F', M') ermittelt, so dass auch das Walzmodell (11) adaptierbar ist.

## Beschreibung

Die vorliegende Erfindung betrifft ein Steuerverfahren für ein Walzwerk,
- wobei eine Steuereinrichtung das Walzwerk mit Ansteuerbefehlen ansteuert, so dass ein erstes Walzgut entsprechend den Ansteuerbefehlen in einem ersten Walzgerüst des Walzwerks gewalzt wird,
- wobei die Steuereinrichtung in Echtzeit mindestens eine Walzgröße erfasst, mit der das Walzen des ersten Walzguts im ersten Walzgerüst des Walzwerks erfolgt,
- wobei die Steuereinrichtung mittels eines Walzmodells, welches das Walzen des ersten Walzguts im ersten Walzgerüst beschreibt, eine mit der erfassten Walzgröße korrespondierende erwartete Walzgröße ermittelt.

Die vorliegende Erfindung betrifft weiterhin ein Steuerprogramm, das Maschinencode umfasst, der von einer Steuereinrichtung für ein Walzwerk unmittelbar abarbeitbar ist und dessen Abarbeitung durch die Steuereinrichtung bewirkt, dass die Steuereinrichtung ein derartiges Steuerverfahren ausführt.

Weiterhin betrifft die vorliegende Erfindung eine Steuereinrichtung für ein Walzwerk, wobei die Steuereinrichtung derart ausgebildet ist, dass sie im Betrieb ein derartiges Steuerverfahren ausführt.

Schließlich betrifft die vorliegende Erfindung ein Walzwerk, die von einer derartigen Steuereinrichtung gesteuert wird.

Die oben genannten Gegenstände sind allgemein bekannt.

Das Walzen von Walzgut erfolgt in Walzwerken derart, dass einem Steuerrechner ein Anfangszustand des Walzguts und ein gewünschter Endzustand des Walzguts vorgegeben werden. Anhand eines Stichplanermittlers ermittelt die Steuereinrichtung einen Stichplan, d. h. die bei den einzelnen Walzvorgängen vorzunehmende Querschnittsabnahme des Walzguts, und die hierfür erforderlichen Gerüsteinstellungen wie beispielsweise Walzspalt, Walzenrückbiegung und dergleichen. Weiterhin ermittelt die Steuereinrichtung mittels des Walzmodells erwartete Walzgrößen, also Walzgrößen, die während des jeweiligen Stiches erwartet werden. Die Walzgrößen sind insbesondere die Walzkraft, das Walzmoment und hiermit gleichwertige Größen wie beispielsweise Anpressdruck und Motorstrom bzw. Motormoment. Das Walzmodell kann Bestandteil des Stichplanermittlers sein.

Wenn das Walzmodell in seiner Gesamtheit das modellierte Walzwerk exakt wiederspiegelt, entsprechen die späteren Istwerte den erwarteten Werten. Oftmals beschreibt das Modell den Walzvorgang jedoch nur unkorrekt, so dass sich Abweichungen der tatsächlichen Walzgrößen von den erwarteten Walzgrößen ergeben. Die Abweichungen können dazu benutzt werden, um das Walzkraftmodell zu adaptieren. Dies ist als solches bekannt. Das Adaptieren erfolgt in manchen Fällen online, in anderen Fällen offline. Der Begriff "offline" bedeutet ein Adaptieren losgelöst vom laufenden Betrieb des Walzwerks. Der Begriff "online" bedeutet ein Adaptieren in Verbindung mit dem laufenden Betrieb des Walzwerks. Eine Online-Adaptierung muss in wenigen Sekunden abgeschlossen sein. Insbesondere muss sie so schnell abgeschlossen sein, dass beim Walzen des nächsten Walzguts mit dem adaptierten Modell gerechnet werden kann.

Die für einen Walzvorgang erforderliche Walzkraft und das erforderliche Walzmoment hängen nicht nur von dem zu walzenden Material als solchem ab, sondern auch von dessen internem Zustand, insbesondere von dessen Temperatur, dessen Phasenanteilen und dessen Gefügestruktur. Auch dies ist bekannt, siehe beispielsweise die WO 2008/043684 A1. Aus der genannten WO-Schrift ist weiterhin bekannt, dass die entsprechenden Eigenschaften mittels entsprechender Modelle vorhersagbar sind. Im Stand der Technik ermittelt die Steuereinrichtung mittels entsprechender weiterer Modelle (Zusatzmodelle im Sinne der vorliegenden Erfindung) die entsprechenden Eigenschaften des Walzguts, die zum Zeitpunkt des Walzens des Walzguts im Walzgut vorliegen. Die entsprechenden ermittelten Eigenschaften berücksichtigt die Steuereinrichtung im Rahmen des Walzmodells bei der Ermittlung der Gerüsteinstellungen und der Walzgrößen. Auch diese Modelle sind oftmals mit Modellfehlern behaftet und müssen daher adaptiert werden.

Aus der US 6,546,310 B1 ist ein Steuerverfahren für ein Walzwerk bekannt, bei dem eine Steuereinrichtung das Walzwerk mit Ansteuerbefehlen ansteuert, so dass ein Walzgut entsprechend den Ansteuerbefehlen in Walzgerüsten des Walzwerks gewalzt wird. Zur Ermittlung der Ansteuerbefehle, die Betriebsparameter der Walzgerüste einstellen, wird unter anderem ein Gefügeoptimierer verwendet. Die Modelle, die der Ermittlung der Ansteuerbefehle zu Grunde liegen - also unter anderem der erwähnte Gefügeoptimierer -, werden anhand der Messwerte für bestimmte Zustände des Walzwerks oder daraus abgeleiteter Größen adaptiert. In der US 6,546,310 B1 ist nicht ausgesagt, um welche Zustände des Walzwerks es sich handelt. Auch ist nicht ausgesagt, welches Modell anhand welcher Größe adaptiert wird.

Eine Onlineadaptierung eines Temperaturmodells des Walzguts ist vergleichsweise einfach zu bewerkstelligen. Denn die Temperatur des Walzguts ist vergleichsweise einfach und vor allem in Echtzeit zu erfassen. Für Temperaturmodelle des Walzguts sind daher Verfahren bekannt, das entsprechende Temperaturmodell online zu adaptieren. Messverfahren, mittels derer online und in Echtzeit die Gefügestruktur oder die Phasenanteile des Walzguts direkt ermittelbar sind, sind jedoch nicht bekannt. Die Adaption eines Gefügemodells, mittels dessen die Gefügestruktur des Walzguts zum Zeitpunkt eines bestimmten Walzvorgangs vorhergesagt wird, erfolgt im Stand der Technik daher offline. Gleiches gilt für ein Phasenumwandlungsmodell, mittels dessen die Phasenanteile des Walzguts zum Zeitpunkt eines bestimmten Walzvorgangs vorhergesagt werden.

Es ist selbstverständlich denkbar, anhand der Walzgrößen an Stelle des Walzmodells das Zusatzmodell zu adaptieren. Dies würde jedoch voraussetzen, dass das Walzmodell als solches korrekt und fehlerfrei ist. Eine entsprechende Annahme ist in der Regel nicht zutreffend. Eine Abweichung der erfassten Walzgröße von der erwarteten Walzgröße kann daher nicht ohne weiteres einem Fehler im Zusatzmodell zugeordnet werden. Stattdessen könnte ebenso gut ein Fehler des Walzmodells vorliegen oder der Fehler sich auf das Walzmodell und das Zusatzmodell aufteilen, wobei die Aufteilung unbekannt ist. Es ist daher nicht ohne weiteres möglich und sinnvoll, das Zusatzmodell anhand der Walzgröße zu adaptieren.

Die Aufgabe der vorliegenden Erfindung besteht darin, Möglichkeiten zu schaffen, mittels derer auch die Zusatzmodelle auf einfache Weise adaptierbar sind und dennoch die Adaptierung physikalisch korrekt ist.

Die Aufgabe wird durch ein Steuerverfahren für ein Walzwerk mit den Merkmalen des Anspruchs 1 gelöst. Vorteilhafte Ausgestaltungen des erfindungsgemäßen Steuerverfahrens sind Gegenstand der abhängigen Ansprüche 2 bis 10.

Erfindungsgemäß ist - zusätzlich zu den eingangs genannten Merkmalen - vorgesehen,
- dass die Steuereinrichtung mittels eines Zusatzmodells eine von der Walzgröße verschiedene Eigenschaft des Walzguts ermittelt, die zum Zeitpunkt des Walzens des ersten Walzguts im ersten Walzgerüst in dem ersten Walzgut vorliegt,
- dass die Steuereinrichtung die ermittelte Eigenschaft des ersten Walzguts im Rahmen des Walzmodells bei der Ermittlung der erwarteten Walzgröße berücksichtigt,
- dass die Steuereinrichtung die Abweichung der erfassten Walzgröße von der erwarteten Walzgröße ermittelt und anhand der Abweichung der erfassten Walzgröße von der erwarteten Walzgröße zumindest das Zusatzmodell adaptiert und
- dass die Abweichung einer erfassten zusätzlichen Messgröße von einer zusätzlichen, anhand zumindest des Walzmodells ermittelten korrespondierenden Erwartungsgröße ermittelt wird, so dass auch das Walzmodell adaptierbar ist.

Beispielsweise ist es möglich,
- dass die Steuereinrichtung anhand der Abweichung der erfassten Walzgröße von der erwarteten Walzgröße mögliche erste Adaptionskombinationen des Walzmodells und des Zusatzmodells ermittelt und speichert,
- dass die zusätzliche Messgröße eine beim späteren Walzen des ersten Walzguts in einem zweiten Walzgerüst und/oder beim späteren Walzen eines zweiten Walzguts im ersten Walzgerüst erfasste Walzgröße ist,
- dass die Steuereinrichtung in zur Ermittlung der ersten Adaptionskombinationen analoger Weise anhand der Abweichung der zusätzlichen Messgröße von der zusätzlichen Erwartungsgröße mögliche zweite Adaptionskombinationen des Walzmodells und des Zusatzmodells ermittelt,
- dass die Steuereinrichtung die Speicherung nur derjenigen der ersten Adaptionskombinationen beibehält, die auch mögliche zweite Adaptionskombinationen sind, und
- dass die Steuereinrichtung das Zusatzmodell und das Walzmodell anhand derjenigen der ersten Adaptionskombinationen adaptiert, deren Speicherung beibehalten wird.

Diese Vorgehensweise führt zwar nicht in allen Fällen, aber zumindest in vielen Fällen auf längere Sicht zu eindeutigen Ergebnissen. Denn die Anzahl an zulässigen Adaptionskombinationen kann nach und nach verringert werden, so dass in günstig gelagerten Fällen am Ende nur eine einzige Adaptionskombination (bzw. einige wenige, eng benachbarte Adaptionskombinationen) übrig bleiben.

Alternativ zu einer gleichwertigen Adaptierung des Zuatzmodells und des Walzmodells ist es möglich, das Walzmodell vorab zu trainieren, so dass es zwar noch nicht völlig optimal ist, aber nahezu optimal. In diesem Fall ist bevorzugt, dass die Steuereinrichtung durch Optimieren einer Kostenfunktion sowohl das Walzmodell als auch das Zusatzmodell adaptiert, in die Kostenfunktion jedoch zusätzlich zu der Abweichung der Walzgröße von der erwarteten Walzgröße ein von der Adaption des Walzmodells als solcher abhängiger Strafterm eingeht. Dadurch wird erreicht, dass vorrangig das Zusatzmodell adaptiert wird.

Alternativ zu einer Adaption des Walzmodells und des Zusatzmodells im selben Adaptionsvorgang ist es möglich, dass die Steuereinrichtung im Rahmen der Adaptierung des Zusatzmodells ausschließlich das Zusatzmodell, nicht aber das Walzmodell adaptiert und dass anhand der Abweichung der zusätzlichen Messgröße von der zusätzlichen Erwartungsgröße ausschließlich das Walzmodell, nicht aber das Zusatzmodell adaptiert wird. Diese Vorgehensweise bietet sich an, wenn auf Grund der Umstände, anhand derer die zusätzliche Messgröße erfasst wird, vorab bekannt ist, dass der Einfluss der mittels des Zusatzmodells ermittelten Eigenschaft auf die zusätzliche Messgröße nur in geringem Umfang oder gar nicht gegeben ist.

Im Falle einer separaten Adaptierung des Zusatzmodells einerseits und des Walzmodells andererseits ist bevorzugt, dass das Adaptieren des Walzmodells vorab erfolgt. Unabhängig davon, ob das Adaptieren des Walzmodells vorab erfolgt oder nicht, ist es jedoch möglich,
- dass anhand von Zusatzinformationen, die von der mittels des Zusatzmodells zu ermittelnden Eigenschaft des Walzguts verschieden sind, entschieden wird, ob die Eigenschaft des Walzguts beim Erfassen der Walzgröße einen vorbestimmten Wert aufweist,
- dass die Steuereinrichtung bejahendenfalls anhand der Abweichung der Walzgröße von der erwarteten Walzgröße ausschließlich das Walzmodell, nicht aber das Zusatzmodell adaptiert und
- dass die Steuereinrichtung verneinendenfalls anhand der Abweichung der Walzgröße von der erwarteten Walzgröße ausschließlich das Zusatzmodell, nicht aber das Walzmodell adaptiert.

Auf Grund des Umstands, dass die erfasste Walzgröße in Echtzeit zur Verfügung steht, ist es möglich, das Adaptieren des Zusatzmodells online vorzunehmen. Diese Vorgehensweise ist bevorzugt. Insbesondere (aber nicht ausschließlich) im Falle eines Adaptierens des Zusatzmodells online ist bevorzugt, dass der Steuereinrichtung ein Anfangszustand des ersten Walzguts und ein gewünschter Endzustand des ersten Walzguts vorgegeben sind und dass die Steuereinrichtung die Ansteuerbefehle unter Verwendung des Walzmodells und des Zusatzmodells ermittelt.

Das Zusatzmodell kann prinzipiell beliebiger Natur sein. Es kann sich beispielsweise um ein Temperaturmodell handeln, mittels dessen die Temperatur des Walzguts und der Wärmeübergang zur Umgebung modelliert werden. In einer bevorzugten Ausgestaltung der vorliegenden Erfindung ist vorgesehen, dass das Zusatzmodell ein Phasenumwandlungsmodell umfasst, mittels dessen als Eigenschaft des Walzguts dessen Phasenanteile ermittelt werden. Alternativ oder zusätzlich kann das Zusatzmodell ein Gefügemodell umfassen, mittels dessen als Eigenschaft des Walzguts dessen Gefügestruktur ermittelt wird.

Die Aufgabe wird weiterhin gelöst durch ein Steuerprogramm der eingangs genannten Art, dessen Abarbeitung durch die Steuereinrichtung bewirkt, dass die Steuereinrichtung ein erfindungsgemäßes Steuerverfahren ausführt.

Das Steuerprogramm ist in der Regel auf einem Datenträger in maschinenlesbarer Form gespeichert. Der Datenträger kann Bestandteil der Steuereinrichtung sein.

Die Aufgabe wird weiterhin durch eine Steuereinrichtung der eingangs genannten Art gelöst, die derart ausgebildet ist, das sie im Betrieb ein erfindungsgemäßes Steuerverfahren ausführt.

Schließlich wird die Aufgabe durch ein Walzwerk gelöst, das von einer erfindungsgemäßen Steuereinrichtung gesteuert wird.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch ein Walzwerk,
- FIG 2: ein Ablaufdiagramm,
- FIG 3: ein Blockschaltbild einer Steuereinrichtung und
- FIG 4 bis 9: Ablaufdiagramme.

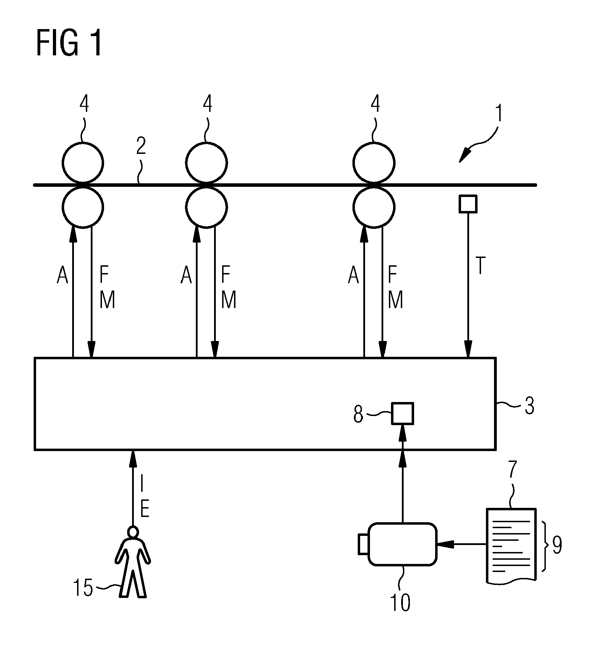

Gemäß FIG 1 wird in einem Walzwerk 1 ein Walzgut 2 gewalzt. Bei dem Walzgut 2 handelt es sich in der Regel um ein Metall, beispielsweise Stahl. Es kann insbesondere bandförmig sein. Das Walzwerk 1 wird von einer Steuereinrichtung 3 gesteuert. Das Walzwerk 1 weist mindestens ein Walzgerüst 4 auf, in dem das Walzgut 2 gewalzt wird. Meist sind entsprechend der Darstellung von FIG 1 mehrere Walzgerüste 4 vorhanden, in denen das Walzgut 2 sukzessiv gewalzt wird.

Die Steuereinrichtung 3 ist derart ausgebildet, dass sie im Betrieb ein Steuerverfahren für das Walzwerk 1 ausführt. In der Regel ist die Steuereinrichtung 3 zu diesem Zweck mit einem Steuerprogramm 7 programmiert, das in einem Datenträger 8 abgespeichert ist, der Bestandteil der Steuereinrichtung 3 ist. Beispielsweise kann der Datenträger 8 als Festplatte der Steuereinrichtung 3 ausgebildet sein. Die Speicherung im Datenträger 8 erfolgt selbstverständlich in maschinenlesbarer Form.

Das Steuerprogramm 7 umfasst gemäß FIG 1 Maschinencode 9, der von der Steuereinrichtung 3 unmittelbar abarbeitbar ist. Das Abarbeiten des Maschinencodes 9 durch die Steuereinrichtung 3 bewirkt, dass die Steuereinrichtung 3 das Steuerverfahren ausführt.

Das Steuerprogramm 7 kann der Steuereinrichtung 3 auf beliebige Weise zugeführt worden sein. Rein beispielhaft ist in FIG 1 ein mobiler Datenträger 10 dargestellt, auf dem das Steuerprogramm 7 in maschinenlesbarer Form gespeichert ist. Der mobile Datenträger 10 ist gemäß der Darstellung von FIG 1 als USB-Memorystick ausgebildet. Es sind jedoch beliebige andere Ausgestaltungen ebenfalls möglich, beispielsweise als CD-ROM oder als SD-Speicherkarte.

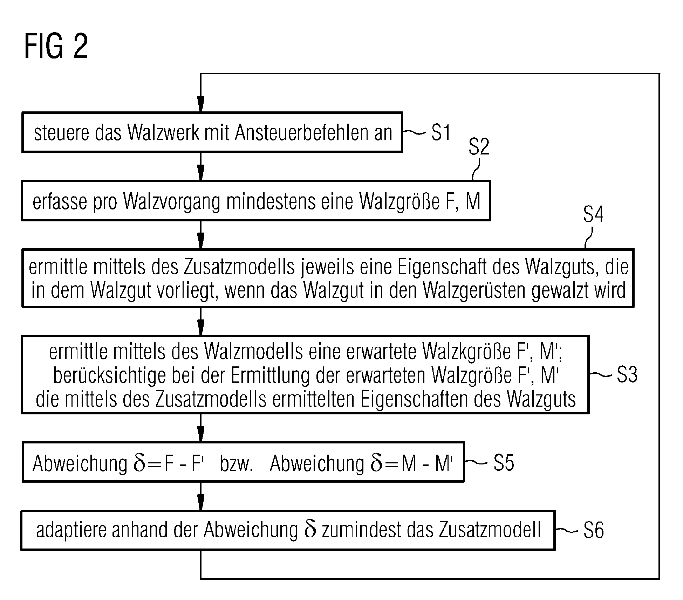

Das von der Steuereinrichtung 3 ausgeführte Steuerverfahren wird nachstehend in Verbindung mit FIG 2 näher erläutert.

Gemäß FIG 2 steuert die Steuereinrichtung 3 in einem Schritt S1 das Walzwerk 1 mit Ansteuerbefehlen A an. Gemäß FIG 1 bewirken die Ansteuerbefehle A beispielsweise, dass die einzelnen Walzgerüste 4 das Walzgut 2 mit entsprechenden Walzkräften F und Walzmomenten M beaufschlagen.

Während das Walzgut 2 in den Walzgerüsten 4 des Walzwerks 1 gewalzt wird, erfasst die Steuereinrichtung 3 in einem Schritt S2 pro Walzvorgang mindestens eine Walzgröße F, M, mit der das Walzen des Walzguts 2 im jeweiligen Walzgerüst 4 erfolgt.

Bei der Walzgröße F, M kann es sich um eine Gerüstwirkgröße F, M handeln. Die Gerüstwirkgrößen F, M sind diejenigen Größen, mit denen das jeweilige Walzgerüst 4 auf das Walzgut 2 einwirkt. Als Gerüstwirkgrößen F, M kommen im Wesentlichen die Walzkraft F und das Walzmoment M in Frage. Alternativ kann es sich um gleichwertige Größen handeln. Beispielsweise kann an Stelle der Walzkraft F der Druck in einer das jeweilige Walzgerüst 4 verstellenden Hydraulikzylindereinheit herangezogen werden, an Stelle des Walzmoments M das Motormoment oder der Motorstrom des Antriebs für das jeweilige Walzgerüst 4. Als Gerüstwirkgröße kommen weiterhin der Walzspalt und eventuell die Walzenumfangsgeschwindigkeit in Frage.

Alternativ oder zusätzlich kann es sich bei der Walzgröße um eine Walzgutgröße handeln, insbesondere eine geometrische Walzgutgröße wie beispielsweise die ein- oder auslaufseitigen Abmessungen des Walzguts 2 oder die ein- oder auslaufseitige Walzgutgeschwindigkeit. Eventuell kommt auch die Temperatur des Walzguts 2 in Frage.

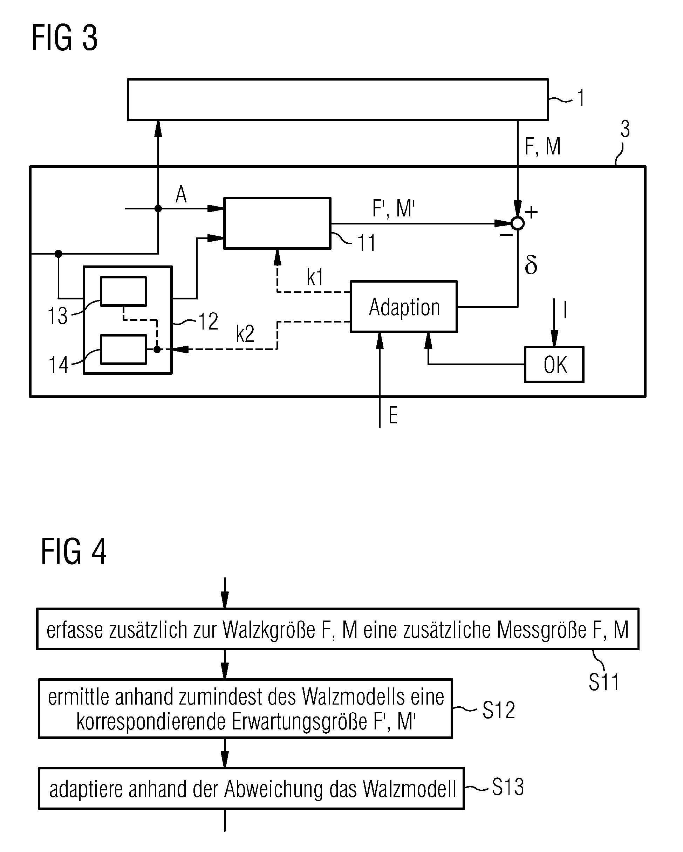

Die Steuereinrichtung 3 weist gemäß FIG 3 intern ein Walzmodell 11 auf. Das Walzmodell 11 beschreibt das Walzen des Walzguts 2 in den Walzgerüsten 4. Mittels des Walzmodells 11 ermittelt die Steuereinrichtung 3 in einem Schritt S3 für mindestens einen Walzvorgang eine erwartete Walzgröße F', M'. Die erwartete Walzgröße F', M' korrespondiert mit der entsprechenden erfassten Walzgröße F, M. Das Walzmodell 11 basiert auf mathematisch-physikalischen Gleichungen, insbesondere auf algebraischen Gleichungen und/oder Differenzialgleichungen.

Die Steuereinheit 3 weist gemäß FIG 3 weiterhin ein Zusatzmodell 12 auf. Auch das Zusatzmodell 12 basiert auf mathematisch-physikalischen Gleichungen, insbesondere auf algebraischen Gleichungen und/oder Differenzialgleichungen. Mittels des Zusatzmodells 12 ermittelt die Steuereinrichtung 3 in einem Schritt S4 eine Eigenschaft des Walzguts 2, die in dem Walzgut 2 jeweils vorliegt, wenn das Walzgut 2 in den Walzgerüsten 4 gewalzt wird. Die Eigenschaft wird für jedes Walzgerüst 4 für den Zeitpunkt ermittelt, zu dem das Walzgut 2 in dem jeweiligen Walzgerüst 4 gewalzt wird. Sie ist von der erfassten Walzgröße F, M verschieden.

Das Zusatzmodell 12 kann prinzipiell beliebiger Natur sein. Beispielsweise kann das Zusatzmodell 12 gemäß FIG 3 ein Phasenumwandlungsmodell 13 umfassen. In diesem Fall werden anhand des Phasenumwandlungsmodells 13 als Eigenschaft des Walzguts 2 dessen Phasenanteile ermittelt. Gegebenenfalls kann das Phasenumwandlungsmodell 13 als Ergebnis zusätzlich eine Energiebilanz liefern, die bei der Ermittlung der Temperatur des Walzguts 2 berücksichtigt wird. Alternativ oder zusätzlich zum Vorhandensein des Phasenumwandlungsmodells 13 kann das Zusatzmodell 12 ein Gefügemodell 14 umfassen. In diesem Fall wird mittels des Gefügemodells 14 als Eigenschaft des Walzguts 2 dessen Gefügestruktur und damit dessen Verfestigungsgrad ermittelt.

Das Zusatzmodell 12 kann - alternativ oder zusätzlich - auch ein anderes Modell umfassen, beispielsweise in dem Fall, dass die erfasste Walzgröße F, M nicht die Temperatur des Walzguts 2 ist, ein Temperaturmodell, mittels dessen die Temperatur des Walzguts 2 ermittelt wird. Unabhängig von der konkreten Art des Zusatzmodells 12 werden jedoch die mittels des Zusatzmodells 12 ermittelten Eigenschaften des Walzguts 2 im Schritt S3 bei der Ermittlung der erwarteten Walzgröße F', M' berücksichtigt. Der Schritt S4 ist daher dem Schritt S3 vorgeordnet.

In einem Schritt S5 ermittelt die Steuereinrichtung 3 die Abweichung δ der erfassten Walzgröße F, M von der erwarteten Walzgröße F', M'. Anhand der Abweichung δ adaptiert die Steuereinrichtung 3 in einem Schritt S6 zumindest das Zusatzmodell 12.

Wenn ohne weitergehende Maßnahmen nur das Zusatzmodell 12 adaptiert wird, ist es theoretisch möglich, dass das Adaptieren des Zusatzmodells 12 fehlerhaft ist, weil das Walzmodell 11 fehlerbehaftet ist. Um dies zu vermeiden, sind gemäß FIG 4 Schritte S11 bis S13 vorgesehen. Im Schritt S11 erfasst die Steuereinrichtung 3 eine zusätzliche Messgröße F, M. Die Erfassung der zusätzlichen Messgröße F, M erfolgt zusätzlich zur Walzgröße F, M. Beispielsweise kann es sich um eine Walzgröße F, M handeln, die bei einem anderen Walzvorgang (also in einem anderen Walzgerüst 4 als zuvor und/oder bei einem anderen Walzgut 2 als zuvor) erfasst wird. Es kann sich auch um eine andere Größe handeln. Im Schritt S12 ermittelt die Steuereinrichtung 3 anhand zumindest des Walzmodells 11 - also entweder nur anhand des Walzmodells 11 oder anhand des Walzmodells 11 und des Zusatzmodells 12 - eine Erwartungsgröße F', M', die mit der zusätzlichen Messgröße F, M korrespondiert. Dadurch ist - beispielsweise im Schritt S13 - auch das Walzmodell 11 adaptierbar.

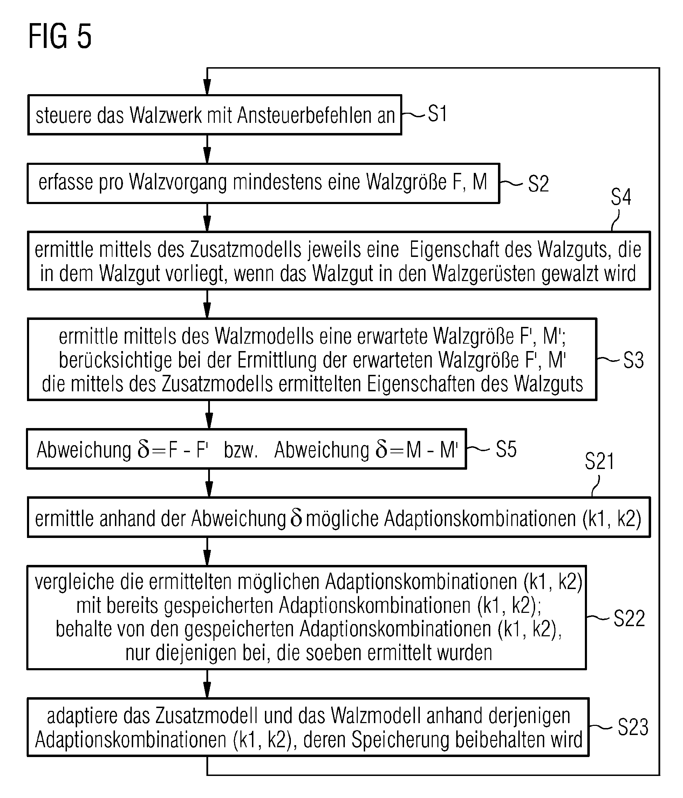

Die Art und Weise, wie die Schritte S11 bis S13 in den Ablauf von FIG 2 eingebettet werden, kann vielfältiger Natur sein. Beispielsweise ist eine Ausgestaltung gemäß FIG 5 möglich.

FIG 5 enthält die Schritte S1 bis S5 von FIG 2. Zu den Schritten S1 bis S5 sind daher keine erneuten Ausführungen erforderlich. Der Schritt S6 von FIG 2 ist in FIG 5 durch Schritte S21 bis S23 ersetzt. Durch die Schritte S21 bis S23 wird in Verbindung mit dem Rücksprung vom Schritt S23 zum Schritt S2 eine mögliche Einbindung der Schritte S11 bis S13 von FIG 4 realisiert.

Im Schritt S21 ermittelt die Steuereinrichtung 3 anhand der Abweichung δ mögliche Adaptionskombinationen. Jede Adaptionskombination umfasst einen ersten Adaptionsfaktor k1 für das Walzmodell 11 und einen zweiten Adaptionsfaktor k2 für das Zusatzmodell 12 bzw. eines der im Zusatzmodell 12 enthaltenen Modelle 13, 14.

Auf Grund des Umstandes, dass im Schritt S2 nur für einen einzelnen Walzvorgang - also beispielsweise für das Walzen des Walzguts 2 im zweiten der in FIG 1 dargestellten Walzgerüste 4 - die Walzgrößen F, M erfasst werden und in den Schritten S3, S4 nur für diesen einen Walzvorgang die korrespondierenden erwarteten Walzgrößen F', M' ermittelt werden, ergibt sich eine Unbestimmtheit. Denn zwei unbekannten Größen (nämlich den Adaptionsfaktoren k1, k2) steht nur eine einzige Messung gegenüber. Es ergibt sich daher im Schritt S21 eine Vielzahl möglicher Adaptionskombinationen.

Im Schritt S22 werden die im Schritt S21 ermittelten möglichen Adaptionskombinationen mit anderen Adaptionskombinationen verglichen, die der Steuereinrichtung 3 bereits bekannt und gespeichert sind. Von den gespeicherten Adaptionskombinationen werden im Schritt S22 nur diejenigen beibehalten, die auch im Schritt S21 ermittelt wurden. Im Schritt S22 erfolgt daher eine Reduzierung der möglichen Adaptionskombinationen.

Im Schritt S23 adaptiert die Steuereinrichtung 3 das Zusatzmodell 12 und das Walzmodell 11 anhand derjenigen Adaptionskombinationen, deren Speicherung im Schritt S22 beibehalten wird. Sodann geht die Steuereinrichtung 3 zum Schritt S2 zurück.

Beim erstmaligen Durchlauf der Schleife von den Schritten S2 bis S23 ist völlig unbekannt, welche Adaptionskombinationen möglich sind. Beim erstmaligen Durchlaufen der genannten Schleife werden daher im Schritt S22 alle Adaptionskombinationen gespeichert, die im Schritt S21 ermittelt werden. Bei späteren Durchläufen der Schleife bilden die jeweils gespeicherten möglichen Adaptionskombinationen eine Basis, die immer weiter reduziert wird. Im Idealfall bleibt nur eine einzige mögliche Adaptionskombination übrig bzw. bleiben nur einige wenige, eng zusammenliegende Adaptionskombinationen übrig.

Die obenstehend in Verbindung mit FIG 5 erläuterte Vorgehensweise führt nicht in allen Fällen zu eindeutigen Ergebnissen. In vielen Fällen sind jedoch gute Resultate erzielbar.

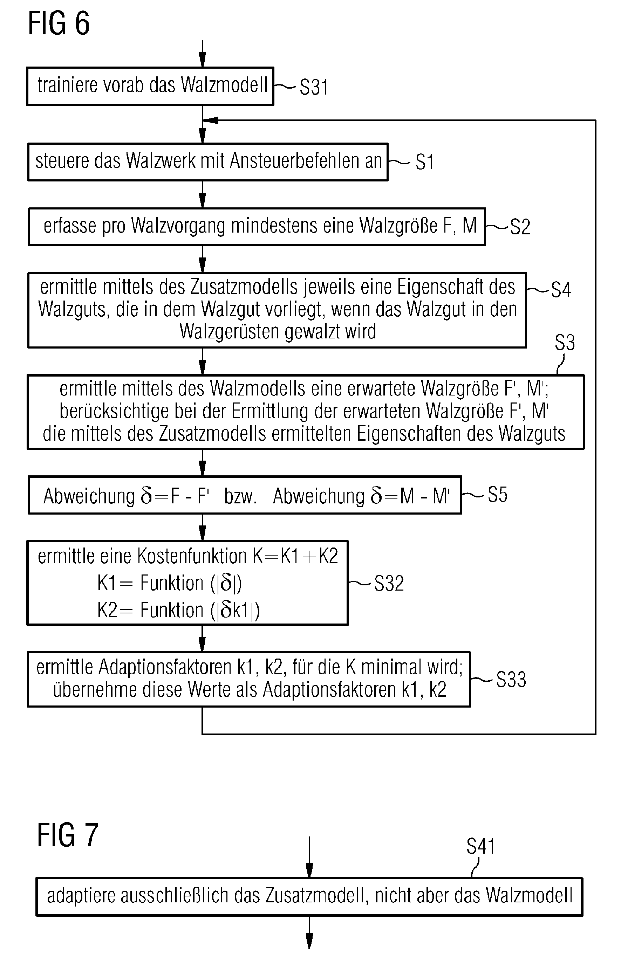

Alternativ zur Vorgehensweise von FIG 5 ist es möglich, so vorzugehen, wie dies nachfolgend in Verbindung mit FIG 6 erläutert wird.

FIG 6 geht ebenfalls von der Vorgehensweise von FIG 2 aus. Dem Schritt S1 ist jedoch ein Schritt S31 vorangestellt. Der Schritt S6 ist durch Schritte S32 und S33 ersetzt.

Im Schritt S31 wird das Walzmodell 11 vorab trainiert. Dadurch wird erreicht, dass das Walzmodell 11 fehlerfrei bzw. zumindest im Wesentlichen fehlerfrei ist. Beispielsweise kann im Falle des Phasenumwandlungsmodells 13 das Walzgut 2 bei Temperaturen gewalzt werden, die oberhalb der kritischen Temperatur des Walzguts 2 sind, so dass das Phasenumwandlungsmodell 13 nicht zum Tragen kommt. Im Falle des Gefügemodells 14 kann das Walzen des Walzguts 2 mit einer Walzgeschwindigkeit verfolgen, die so klein ist, dass zwischen den einzelnen Walzvorgängen die Rekristallisierung des Walzguts 2 vollständig abgeschlossen ist. In diesem Fall kommt das Gefügemodell 14 nicht zum Tragen. Die Abweichung δ kann in diesem Fall nur auf das Walzmodell 11 selbst zurückzuführen sein. Etwaige Fehler des Phasenumwandlungsmodells 13 bzw. des Gefügemodells 14 kommen nicht zum Tragen. Es ist daher möglich, "guten Gewissens" im Schritt S31 anhand der Abweichung δ, die auf analoge Weise ermittelt wird, wie obenstehend in Verbindung mit FIG 2 beschrieben, ausschließlich das Walzmodell 11 zu adaptieren, nicht aber das Zusatzmodell 12.

Im Schritt S32 kann daher "guten Gewissens" vorausgesetzt werden, dass das Walzmodell 11 fehlerfrei bzw. nahezu fehlerfrei ist. Es ist daher möglich, dass die Steuereinrichtung 3 im Schritt S32 eine Kostenfunktion K ermittelt. In die Kostenfunktion K geht zunächst die Abweichung δ ein. Zusätzlich geht in die Kostenfunktion K ein Strafterm ein, der von der Adaption des ersten Walzmodells 11 als solcher abhängt. Die Kostenfunktion K besteht also aus zwei Teilfunktionen K1, K2, wobei
- die Teilfunktion K1 vom Betrag der Abweichung δ abhängt und
- die zweite Teilfunktion K2 vom Betrag der Änderung des ersten Adaptionsfaktors k1 als solcher abhängt.

In der Regel handelt es sich bei den Teilfunktionen K1, K2 um die Quadrate oder eine höhere Potenz der entsprechenden Werte.

Im Schritt S33 ermittelt die Steuereinrichtung 3 diejenigen Adaptionsfaktoren k1, k2, bei denen die Kostenfunktion K ihren minimalen Wert annimmt. Diese Werte werden als entsprechende Adaptionsfaktoren k1, k2 übernommen.

Es ist möglich, dass der Schritt S31 offline ausgeführt wird. Die Schritte S32 und S33 werden hingegen vorzugsweise online ausgeführt.

Wiederum alternativ ist es möglich, dass die Steuereinrichtung 3 im Rahmen der Adaptierung des Zusatzmodells 12 (Schritt S6 von FIG 2) ausschließlich das Zusatzmodell 12 adaptiert, nicht aber das Walzmodell 11. In diesem Fall wird anhand der Abweichung δ der zusätzlichen Messgröße F, M von der zusätzlichen Erwartungsgröße F', M' ausschließlich das Walzmodell 11 adaptiert, nicht aber das Zusatzmodell 12. Dies wird nachfolgend näher erläutert.

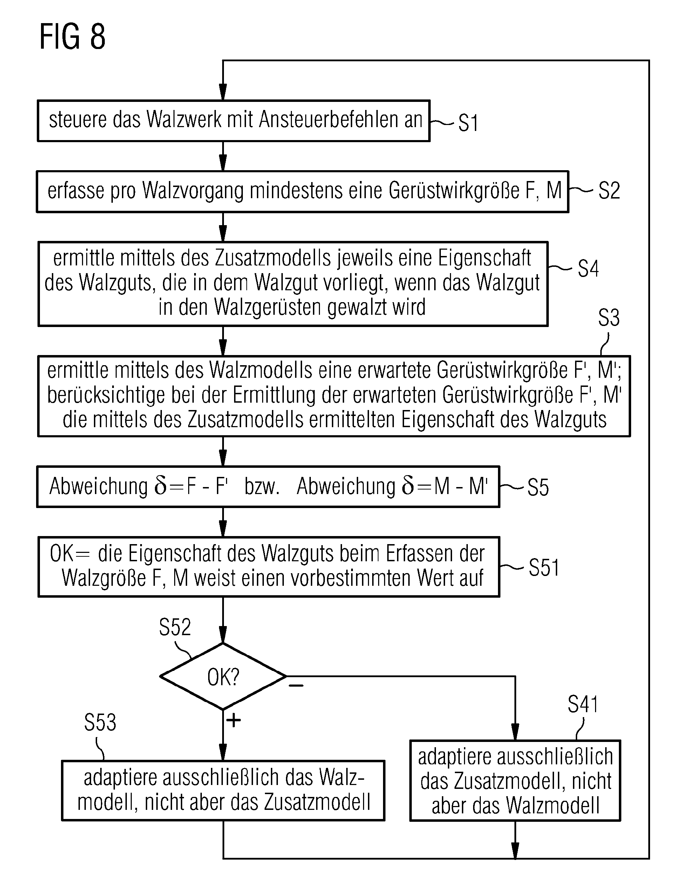

Es ist möglich, dass das Adaptieren des Walzmodells 11, also des Schrittes, in dem ausschließlich das Walzmodell 11, nicht aber das Zusatzmodell 12 adaptiert wird, analog zur Vorgehensweise von FIG 6 vorab erfolgt. In diesem Fall kann beispielsweise - ausgehend von der Vorgehensweise von FIG 6 - bei hinreichend genauer Adaptierung des Walzmodells 11 eine Ersetzung der Schritte S32 und S33 der FIG 6 durch einen Schritt S41 erfolgen (siehe FIG 7). Im Schritt S41 wird ausschließlich das Zusatzmodell 12, nicht aber das Walzmodell 11 adaptiert. Alternativ ist es möglich, die Adaptierung nach Bedarf vorzunehmen. Dies wird nachfolgend in Verbindung mit FIG 8 erläutert.

FIG 8 umfasst die Schritte S1 bis S5 von FIG 2, den Schritt S41 von FIG 7 und zusätzlich Schritte S51 bis S53. Nachfolgend werden nur die Schritte S51 bis S53 erläutert.

Im Schritt S51 werden Zusatzinformationen I ausgewertet. Die Zusatzinformationen I sind von der Eigenschaft des Walzguts 2 verschieden, die mittels des Zusatzmodells 12 ermittelt wird.

Anhand der Zusatzinformationen I wird entschieden, ob die Eigenschaft des Walzguts 2 beim Erfassen der Walzgröße F, M einen vorbestimmten Wert aufweist. Je nachdem, ob diese Bedingung erfüllt ist oder nicht, wird einer logischen Variablen OK der entsprechende logische Wert (WAHR oder UNWAHR) zugewiesen.

Im Schritt S52 wird der Wert der logischen Variablen OK überprüft. Je nach Ergebnis der Überprüfung wird entweder der Schritt S41 oder der Schritt S53 ausgeführt.

Der Schritt S41 wurde bereits erläutert. Im Schritt S53 adaptiert die Steuereinrichtung 3 ausschließlich das Walzmodell 11, nicht aber das Zusatzmodell 12. Sie ermittelt also im Schritt S53 anhand der Abweichung den Adaptionsfaktor k1, anhand dessen das Walzmodell 11 adaptiert wird.

Wenn das Zusatzmodell 12 das Phasenumwandlungsmodell 13 umfasst und die Temperatur des Walzguts 2 beim jeweiligen Walzvorgang hoch genug ist, wird daher ausschließlich das Walzmodell 11 adaptiert, nicht aber das Phasenumwandlungsmodell 13. Wenn im Falle des Vorhandenseins des Gefügemodells 14 die Temperatur des Walzguts 2 hoch genug und die Zeit zwischen zwei Walzvorgängen groß genug ist, kann ebenfalls das Walzmodell 11 adaptiert werden. Anderenfalls wird das Gefügemodell 14 adaptiert.

Analog zur Vorgehensweise von FIG 6 wird die Vorgehensweise von FIG 8 vorzugsweise online ausführt. Es ist weiterhin möglich, dass entsprechend der Darstellung von FIG 8 die Schritte S51 und S52 von der Steuereinrichtung 3 selbsttätig ausgeführt werden. Alternativ ist es möglich, dass der Steuereinrichtung 3 gemäß FIG 1 von einem Bediener 15 eine entsprechende Entscheidung E vorgegeben wird.

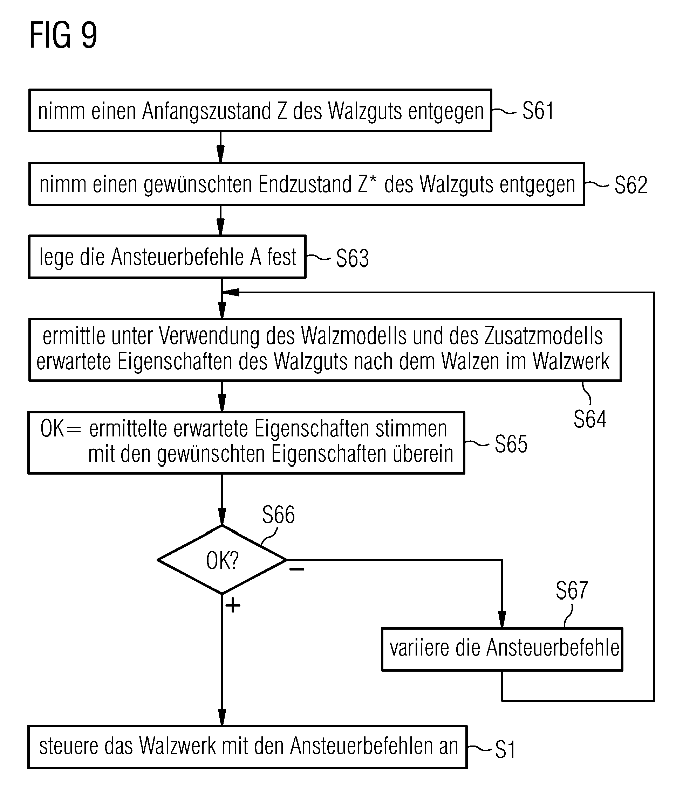

Es ist möglich, die mittels des Walzmodells 11 und des Zusatzmodells 12 ermittelten Ergebnisse nur parallel zur Steuerung des Walzwerks 1 durch die Steuereinrichtung 3 durchzuführen. In diesem Fall bleiben die mittels des Walzmodells 11 und des Zusatzmodells 12 ermittelten Ergebnisse ohne direkten Einfluss auf die Steuerung des Walzwerks 1. Vorzugsweise sind das Walzmodell 11 und das Zusatzmodell 12 jedoch in die Steuerung des Walzwerks 1 mit eingebunden. Dies wird nachfolgend in Verbindung mit der vereinfachten Darstellung von FIG 9 näher erläutert.

Gemäß FIG 9 nimmt die Steuereinrichtung 3 in einem Schritt S61 einen Anfangszustand Z des Walzguts 2 entgegen. Der Anfangszustand Z beschreibt das Walzgut 2 vor dem Walzen durch das Walzwerk 1. In einem Schritt S62 nimmt die Steuereinrichtung 3 einen gewünschten Endzustand Z* des Walzguts 2 entgegen. Der Endzustand Z* bezieht sich auf den Zustand, den das Walzgut 2 nach dem Walzen im Walzwerk 1 aufweisen soll. Der Endzustand Z* umfasst zumindest unter anderem Eigenschaften des Walzguts 2, die mittels des Walzmodells 11 und/oder des Zusatzmodells 12 ermittelbar sind.

In einem Schritt S63 legt die Steuereinrichtung 3 - wenn auch nur vorläufig - die Ansteuerbefehle A fest. In einem Schritt S64 ermittelt die Steuereinrichtung 3 unter Verwendung des Walzmodells 11 und des Zusatzmodells 12 erwartete Eigenschaften des Walzguts 2 nach dem Walzen im Walzwerk 1.

In einem Schritt S65 ermittelt die Steuereinrichtung 3 die logische Variable OK. Die logische Variable OK nimmt den Wert "WAHR" dann und nur dann an, wenn die im Schritt S64 ermittelten erwarteten Eigenschaften - im Rahmen zulässiger Toleranzen - mit den im Schritt S62 entgegen genommenen, durch den Endzustand Z* bestimmten gewünschten Eigenschaften übereinstimmen. Anderenfalls nimmt die logische Variable OK den Wert "UNWAHR" an.

In einem Schritt S66 wird der Wert der logischen Variablen OK überprüft. Wenn die logische Variable OK den Wert "UNWAHR" aufweist, geht die Steuereinrichtung 3 zu einem Schritt S67 über. Im Schritt S67 variiert die Steuereinrichtung 3 die Ansteuerbefehle A. Sodann geht sie zum Schritt S64 zurück. Wenn die logische Variable OK hingegen den Wert "WAHR" aufweist, wird das Walzwerk 1 mit den nunmehr endgültigen Ansteuerbefehlen A angesteuert. Der entsprechende Schritt ist in FIG 9 absichtlich mit dem Bezugszeichen S1 versehen, da er auch dem Schritt S1 von FIG 2 entspricht.

Die vorliegende Erfindung weist viele Vorteile auf. Insbesondere ist sie von der Komplexität her mit den im Stand der Technik ergriffenen Vorgehensweisen vergleichbar, zeigt aber überlegene Ergebnisse.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerverfahren für ein Walzwerk (1),
- wobei eine Steuereinrichtung (3) das Walzwerk (1) mit Ansteuerbefehlen (A) ansteuert, so dass ein erstes Walzgut (2) entsprechend den Ansteuerbefehlen (A) in einem ersten Walzgerüst (4) des Walzwerks (1) gewalzt wird,
- wobei die Steuereinrichtung (3) in Echtzeit mindestens eine Walzgröße (F, M) erfasst, mit der das Walzen des ersten Walzguts (2) im ersten Walzgerüst (4) des Walzwerks (1) erfolgt,
- wobei die Steuereinrichtung (3) mittels eines Walzmodells (11), welches das Walzen des ersten Walzguts (2) im ersten Walzgerüst (4) beschreibt, eine mit der erfassten Walzgröße (F, M) korrespondierende erwartete Walzgröße (F', M') ermittelt,
- wobei die Steuereinrichtung (3) mittels eines Zusatzmodells (12) eine von der Walzgröße (F, M) verschiedene Eigenschaft des Walzguts (2) ermittelt, die zum Zeitpunkt des Walzens des ersten Walzguts (2) im ersten Walzgerüst (4) in dem ersten Walzgut (2) vorliegt,
- wobei die Steuereinrichtung (3) die ermittelte Eigenschaft des ersten Walzguts (2) im Rahmen des Walzmodells (11) bei der Ermittlung der erwarteten Walzgröße (F', M') berücksichtigt,
- wobei die Steuereinrichtung (3) die Abweichung (δ) der erfassten Walzgröße (F, M) von der erwarteten Walzgröße (F', M') ermittelt und anhand der Abweichung (δ) der erfassten Walzgröße (F, M) von der erwarteten Walzgröße (F', M') zumindest das Zusatzmodell (12)
adaptiert und
- wobei die Abweichung (δ) einer erfassten zusätzlichen Messgröße (F, M) von einer zusätzlichen, anhand zumindest des Walzmodells (11) ermittelten korrespondierenden Erwartungsgröße (F', M') ermittelt wird, so dass auch das Walzmodell (11) adaptierbar ist.

2. Steuerverfahren nach Anspruch 1,
**dadurch gekennzeichnet,**
- **dass** die Steuereinrichtung (3) anhand der Abweichung (δ) der erfassten Walzgröße (F, M) von der erwarteten Walzgröße (F', M') mögliche erste Adaptionskombinationen des Walzmodells (11) und des Zusatzmodells (12) ermittelt und speichert,
- **dass** die zusätzliche Messgröße (F, M) eine beim späteren Walzen des ersten Walzguts (2) in einem zweiten Walzgerüst (4) und/oder beim späteren Walzen eines zweiten Walzguts (2) im ersten Walzgerüst (4) erfasste Walzgröße (F, M) ist,
- **dass** die Steuereinrichtung (3) in zur Ermittlung der ersten Adaptionskombinationen analoger Weise anhand der Abweichung (δ) der zusätzlichen Messgröße (F, M) von der zusätzlichen Erwartungsgröße (F', M') mögliche zweite Adaptionskombinationen des Walzmodells (11) und des Zusatzmodells (12) ermittelt,
- **dass** die Steuereinrichtung (3) die Speicherung nur derjenigen der ersten Adaptionskombinationen beibehält, die auch mögliche zweite Adaptionskombinationen sind, und
- **dass** die Steuereinrichtung (3) das Zusatzmodell (12) und das Walzmodell (11) anhand derjenigen der ersten Adaptionskombinationen adaptiert, deren Speicherung beibehalten wird.

3. Steuerverfahren nach Anspruch 1,
**dadurch gekennzeichnet, dass** das Walzmodell (11) vorab trainiert wird und dass die Steuereinrichtung (3) durch Optimieren einer Kostenfunktion (K) sowohl das Walzmodell (11) als auch das Zusatzmodell (12) adaptiert, in die Kostenfunktion (K) jedoch zusätzlich zu der Abweichung (δ) der Walzgröße (F, M) von der erwarteten Walzgröße (F', M') ein von der Adaption des Walzmodells (11) als solcher abhängiger Strafterm eingeht, so dass vorrangig das Zusatzmodell (12) adaptiert wird.

4. Steuerverfahren nach Anspruch 1,
**dadurch gekennzeichnet, dass** die Steuereinrichtung (3) im Rahmen der Adaptierung des Zusatzmodells (12) ausschließlich das Zusatzmodell (12), nicht aber das Walzmodell (11) adaptiert und dass anhand der Abweichung (δ) der zusätzlichen Messgröße (F, M) von der zusätzlichen Erwartungsgröße (F', M') ausschließlich das Walzmodell (11), nicht aber das Zusatzmodell (12) adaptiert wird.

5. Steuerverfahren nach Anspruch 4,
**dadurch gekennzeichnet, dass** das Adaptieren des Walzmodells (11) vorab erfolgt.

6. Steuerverfahren nach Anspruch 4 oder 5,
**dadurch gekennzeichnet,**
- **dass** anhand von Zusatzinformationen (I), die von der mittels des Zusatzmodells (12) zu ermittelnden Eigenschaft des Walzguts (2) verschieden sind, entschieden wird, ob die Eigenschaft des Walzguts (2) beim Erfassen der Walzgröße (F, M) einen vorbestimmten Wert aufweist,
- **dass** die Steuereinrichtung (3) bejahendenfalls anhand der Abweichung (δ) der Walzgröße (F, M) von der erwarteten Walzgröße (F', M') ausschließlich das Walzmodell (11), nicht aber das Zusatzmodell (12) adaptiert und
- **dass** die Steuereinrichtung (3) verneinendenfalls anhand der Abweichung (δ) der Walzgröße (F, M) von der erwarteten Walzgröße (F', M') ausschließlich das Zusatzmodell (12), nicht aber das Walzmodell (11) adaptiert.

7. Steuerverfahren nach einem der obigen Ansprüche,
**dadurch gekennzeichnet, dass** das Adaptieren des Zusatzmodells (12) online erfolgt.

8. Steuerverfahren nach einem der obigen Ansprüche,
**dadurch gekennzeichnet, dass** der Steuereinrichtung (3) ein Anfangszustand (Z) des ersten Walzguts (2) und ein gewünschter Endzustand (Z*) des ersten Walzguts (2) vorgegeben sind und dass die Steuereinrichtung (3) die Ansteuerbefehle (A) unter Verwendung des Walzmodells (11) und des Zusatzmodells (12) ermittelt.

9. Steuerverfahren nach einem der obigen Ansprüche,
**dadurch gekennzeichnet, dass** das Zusatzmodell (12) ein Phasenumwandlungsmodell (13) umfasst, mittels dessen als Eigenschaft des Walzguts (2) dessen Phasenanteile ermittelt werden.

10. Steuerverfahren nach einem der obigen Ansprüche,
**dadurch gekennzeichnet, dass** das Zusatzmodell (12) ein Gefügemodell (14) umfasst, mittels dessen als Eigenschaft des Walzguts (2) dessen Gefügestruktur ermittelt wird.

11. Steuerprogramm, das Maschinencode (9) umfasst, der von einer Steuereinrichtung (3) für ein Walzwerk (1) unmittelbar abarbeitbar ist und dessen Abarbeitung durch die Steuereinrichtung (3) bewirkt, dass die Steuereinrichtung (3) ein Steuerverfahren nach einem der obigen Ansprüche ausführt.

12. Steuerprogramm nach Anspruch 11,
**dadurch gekennzeichnet, dass** es auf einem Datenträger (8, 10) in maschinenlesbarer Form gespeichert ist.

13. Steuerprogramm nach Anspruch 12,
**dadurch gekennzeichnet, dass** der Datenträger (8) Bestandteil der Steuereinrichtung (3) ist.

14. Steuereinrichtung für ein Walzwerk,
**dadurch gekennzeichnet, dass** die Steuereinrichtung derart ausgebildet ist, dass sie im Betrieb ein Steuerverfahren nach einem der Ansprüche 1 bis 10 ausführt.

15. Walzwerk, das von einer Steuereinrichtung (3) nach Anspruch 14 gesteuert wird.
